# EUROPEAN PATENT APPLICATION

(11) **EP 1 743 517 A1**
(43) Date of publication of application: **17.01.2007**
(21) Application number: 06253115.7
(22) Date of filing: 20.06.2006
(51) Int. Cl.: A01G 3/053, A01D 34/90, F16P 3/20

(54) **Powered tool**

(30) Priority: 14.07.2005 GB 0514470
(71) Applicant: Husqvarna UK Limited, County Durham, DL5 6UP (GB)
(72) Inventor: Zetterstrom Smith, Ian, Thirsk Yorkshire YO7 2LJ (GB); Crowley, Donald, North Cowton County Durham DL7 0EL (GB)
(74) Representative: Pratt, David Martin

(57) **Abstract**

A powered tool comprises a main body unit (1) and a functional attachment (2 or 12) having a working appliance (10). The main body unit (1) and the functional attachment (2 or 12) are provided with complementary inter-engageable connectors (7, 8 or 7, 18), and the main body unit is provided with first and second switches (5, 6) for controlling the supply of power to the working appliance (10). The main body unit (1) and the functional attachment (2 or 12) are provided with power transmission means for transmitting power to the working appliance (10). The power transmission means is such that actuation of the first switch (5) or actuation of both switches (5, 6) is necessary to enable the supply of power to the working appliance (10).

## Description

This invention relates to a powered tool having a main body and a plurality of inter-changeable powered heads, such as a hedge trimmer, a line trimmer, a pruner/lopper and a debris collecting/blowing apparatus.

Powered tools of this type are well-known. For example, US Patent Specification 4884314 discloses a portable retractable battery-operated blower for removing light debris from pavements and driveways. US Patent Specification 4413371 discloses a blower attachment for a portable power unit. US Patent Specification 4089114 discloses a cordless electric lawn edger, having a flexible line for cutting grass and weeds. US Patent Specification 4237610 discloses a portable, electrically-energised, cordless grass trimmer, having a rotatable hub which is adapted alternatively to mount a flexible cutting line, a line cutter blade or a mechanical counter balance.

Many of these systems work efficiently, and provide the desired result of cutting, trimming or blowing/collecting. It would, however, be desirable to develop a system which is adaptable selectively to achieve all of these results, while remaining portable, lightweight and easy to use.

The present invention provides a powered tool comprising a main body unit and a functional attachment having a working appliance, the main body unit and the functional attachment being provided with complementary inter-engageable connectors, and the tool being provided with first and second actuators for controlling the supply of power to the working appliance, wherein the arrangement is such that actuation of the first actuator or actuation of both actuators is necessary to enable the supply of power to the working appliance in dependence upon the actuation requirements of the functional attachment.

Advantageously, at least the first actuator, and preferably both the actuators, is/are associated with the main body unit.

In a preferred embodiment, the functional attachment is a hedge trimmer, and the working appliance is a pair of hedge trimmer blades, the power transmission means being such that power is supplied to the hedge trimmer blades only when both actuators are actuated.

Alternatively, the functional attachment is a line trimmer, and the working appliance is a rotatable cutting line, the power transmission means being such that power is supplied to the rotatable cutting line when the first actuator is actuated.

Preferably, the tool further comprises power transmission means for transmitting power from a power source in the main body unit to the working appliance.

Advantageously, the power transmission means includes electrical circuitry provided within the main body unit and the functional attachment, the electrical circuitry within the main body unit including first and second switches which are positioned between a source of electrical power and the connector of the main body unit, the electrical circuitry within the main body unit including first, second and third wires terminating at said connector, the first wire leading from the output of the first switch, the second wire leading from the output of the second switch, and the third wire bypassing the second switch, the first and second switches constituting the first and second actuators.

Where the functional attachment is one requiring two-handed operation (for example a hedge trimmer), the electrical circuitry within the functional attachment includes fourth and fifth wires leading from the power input terminals of an electric motor provided within the functional attachment for powering the working appliance, the fourth and fifth wires terminating at the connector of the functional attachment for electrical connection with the terminations of the first and third wires and the connector of the main body unit.

Where the functional attachment is one needing only one-handed operation (for example a line trimmer), the electrical circuitry within the functional attachment includes fourth and fifth wires leading from the power input terminals of an electric motor provided within the functional attachment for powering the working appliance, the fourth and fifth wires terminating at the connector of the functional attachment for electrical connection with the terminations of the first and second wires at the connector of the main body unit.

Conveniently, the tool further comprises an electrical power source attachable to the main body unit. A battery may constitute the electrical power source.

The invention also provides a powered tool assembly comprising a main body unit and first and second functional attachments each having a respective working appliance, the main body unit and each of the functional attachments being provided with complementary inter-engageable connectors, and the main body unit being provided with first and second actuators for controlling the supply of power to the working appliance of an attached functional attachment, wherein the arrangement is such that actuation of the first actuator enables the supply of power to the working appliance of the first functional attachment, and the actuation of both actuators enables the supply of power to the working appliance of the second functional attachment.

The invention further provides a method of a assembling and operating a powered tool, the method comprising:-
providing a main body unit having first and second actuators;
providing a plurality of functional attachments each having a respective working appliance;
selecting one of the functional attachments and mounting it to the main body unit; and
operating either the first actuator or both actuators of the main body unit to supply power to the working appliance of an attached functional attachment depending upon whether that functional attachment requires one-handed or two-handed operation.

The invention will now be described in greater detail, by way of example, with reference to the drawings, in which:-
Figure 1 is a perspective view of a powered tool constructed in accordance with the invention, the tool having a main body unit and a hedge trimmer attachment;
Figure 2 is a perspective view of the powered tool of the invention, the powered tool having the main body unit of Figure 1 and a line trimmer attachment;
Figure 3 is an exploded perspective view of the main body unit together with the hedge trimmer attachment of Figure 1 and the line trimmer attachment of Figure 2;
Figure 4 is a schematic diagram showing the electric circuit arrangement of the powered tool of Figure 1; and
Figure 5 is a schematic diagram showing the electric circuit arrangement of the powered tool of Figure 2.

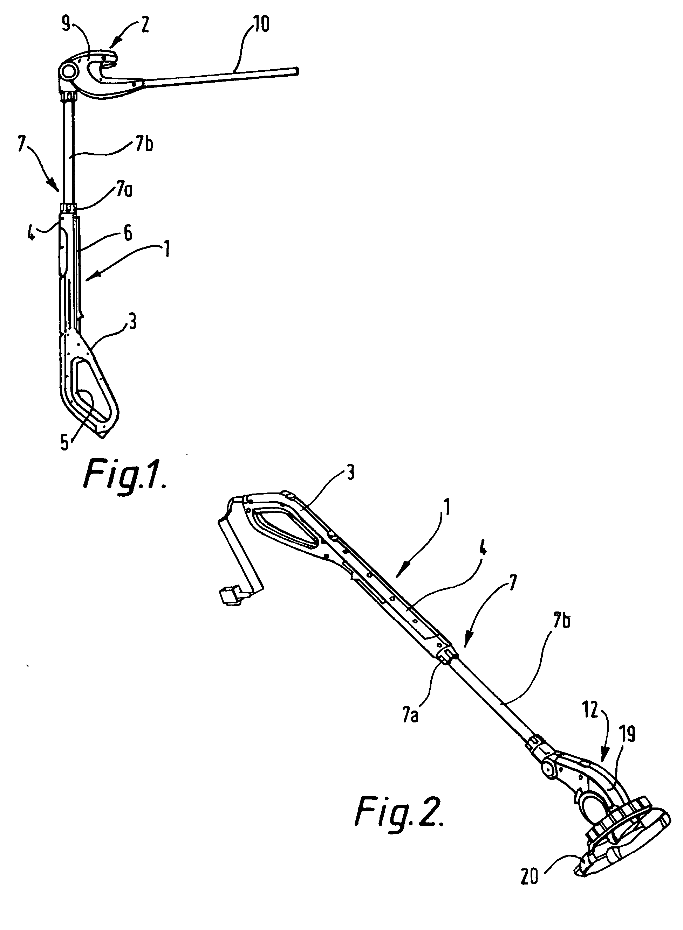

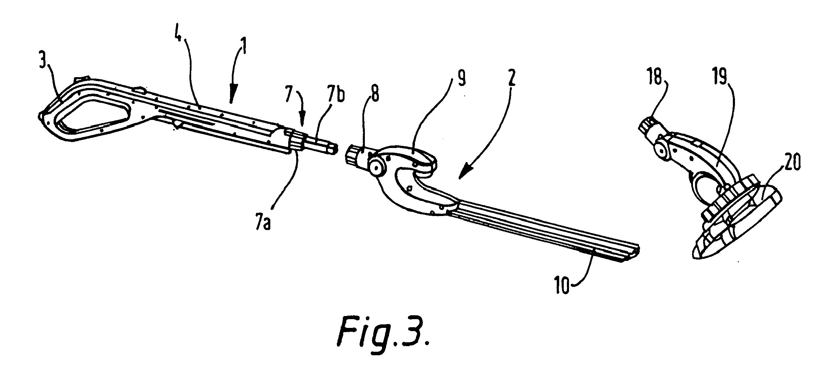

Referring to the drawings, Figure 1 shows a powered tool having a main body (stick handle) unit 1 and a hedge trimmer attachment (functional attachment) 2. The main body unit 1 includes a D-shaped handle 3 and a shaft 4. The handle 3 is provided with a first (main) switch 5, and the shaft 4 is provided with a second switch 6. The main body unit 1 is formed, at the distal end thereof, with a connector 7 which is constituted by a locking sleeve 7a and a telescopic shaft 7b. The shaft 7b is enageable with a complementary connector 8 (see Figure 3) formed at the proximal end of the hedge trimmer attachment 2.

The hedge trimmer attachment 2 includes a main body portion 9 which houses a motor (not shown) in drivable engagement with a pair of hedge trimmer blades (working appliance), indicated generally by the reference numeral 10.

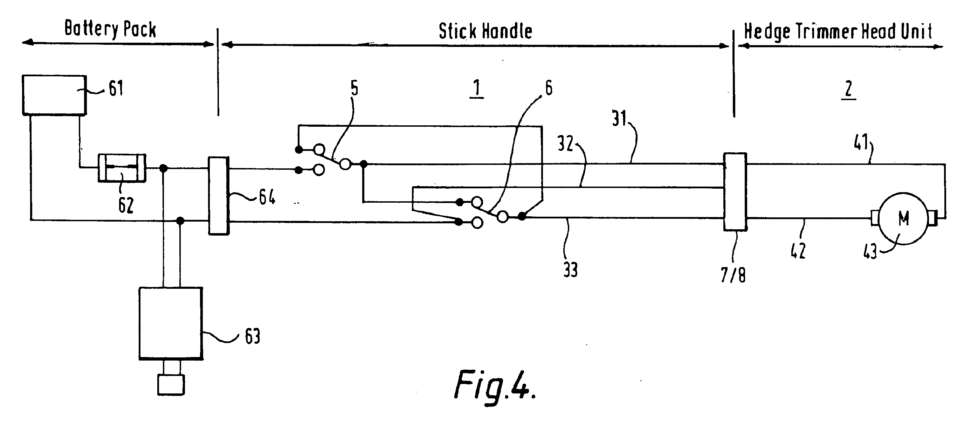

A battery pack (not shown) is connectable to the motor in the main body portion 9 of the hedge trimmer attachment 2, via electrical circuity (see Figure 4) housed within the main body unit 1 and the main body portion 9. The first switch 5 is formed within the D-shaped handle 3 for ease of operation by one hand of an operator, and the second switch 6 extends along the shaft 4 for operation by the other hand of the operator.

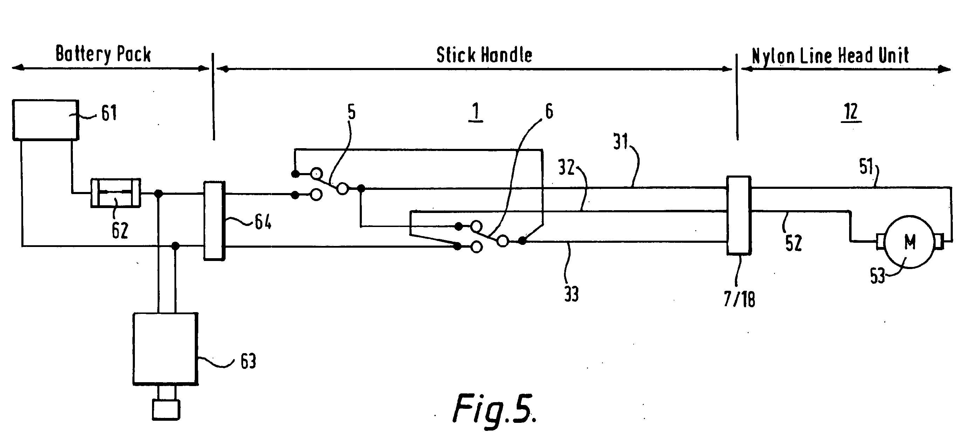

Figure 2 shows a powered tool having the main body unit 1 and a line trimmer attachment 12 (functional attachment). The main body unit 1 is the same as that shown in Figure 1. The line trimmer attachment 12 includes a connector 18 (see Figure 5) which complements the shaft 7b of the connector 7, and a main body portion 19 which houses a motor (not shown) in drivable engagement with a working appliance in the form of a nylon cord (not shown) located within a guard 20. As with the powered tool of Figure 1, the battery pack is connectable to the motor in the main body portion 19 of the line trimmer attachment 12 by electrical circuitry (see Figure 5) housed within the main body unit 1 and the main body portion 19 when the connectors 7 and 18 are engaged.

Safety requirements dictate that a hedge trimmer, such as the hedge trimmer attachment 2, must have controls that are operable by the two hands of an operator. This is because a hedge trimmer is frequently used with the tool in a generally vertical position where one-handed operation could be dangerous, should the operator fail to control the orientation of the tool when in use. The main body unit 1 does, therefore, have the two switches 5 and 6 which are positioned in different regions of the unit, so that the hedge trimmer attachment 2 can only be powered when the tool is gripped with two hands and both the switches 5 and 6 are actuated.

However, as a line trimmer, such as the line trimmer attachment 12, is usually used for grass trimming with the shaft 4 of the main body unit 1 held at an angle of typically 30 to 40 degrees to the ground (so there is little danger of injury to an operator should the tool be used with one-handed operation) there is no need for such an attachment to require two-handed switching. The line trimmer attachment 12 can, therefore, be powered using only the switch 5 so that the tool can be used, if required, by one-handed operation.

Figures 4 and 5 show the electrical circuitry for two-handed switching and one-handed switching respectively, and it will be noted that the circuitry within the main body unit 1 is the same for both arrangements, the circuitry differing only in the attachments 2 and 12.

Referring to Figure 4, the circuitry in the main body unit 1 includes the first and second switches 5 and 6 and circuitry leading to the connector 7. This circuity includes three electrical wires 31, 32 and 33 which terminate at the connector 7, the wire 31 leading from the output of the switch 5, and the wire 33 leading from the output of the switch 6. The third wire 32 leads from the input side of the second switch 6 to the connector 7.

The circuitry within the hedge trimmer attachment 2 includes wires 41 and 42 which are electrically connected to the wires 31 and 33 via the intra-engaged connectors 7 and 8. The wires 41 and 42 are connected to opposite terminals of the hedge trimmer motor (identified in Figure 4 by the reference numeral 43). Accordingly, when the switches 5 and 6 are actuated (as shown in Figure 4), power is supplied to the motor 43. However, if either of the switches 5 and 6 is in the non-actuated position, power cannot reach the motor 43.

Figure 5 shows the circuit arrangement for powering the line trimmer attachment 12. As most of this circuitry is identical with that of Figure 4, only the circuitry within the line trimmer attachment 12 will be described. Thus, the line trimmer attachment circuitry includes two wires 51 and 52 which are connected to the wires 31 and 32 of the main body unit upon engagement of the connectors 7 and 18. The wires 51 and 52 are connected to opposite terminals of the line trimmer motor (identified in Figure 5 by the reference numeral 53). Accordingly, when the switch 5 is actuated (as shown in Figure 5), power is supplied to the motor 53.

Figures 4 and 5 also show the circuitry associated with the battery pack. This circuitry includes a 24 volt battery 61, a fuse 62, a charger circuit board 63 and a connector socket 64 for connection to the main body unit 1.

An important advantage of the system described above is that components (such as a battery or a power supply cord, handles and switch systems) that are normally duplicated in power tools, can all be provided in a single piece of equipment (the main body unit 1). This main body unit 1 can then be used with alternative functional attachments such as the hedge trimmer attachment 2, the line trimmer attachment 12, or other functional attachments such as a pruner/lopper or a debris collecting/blowing apparatus. This results in a system that is less expensive to manufacture and purchase, and can be expanded with the purchase of separate, additional functional attachments.

Another important advantage of the system of the invention is the ease with which a functional attachment can be controlled by use of either a single switch or both switches, depending upon the operational requirements of that functional attachment. In particular, as the hedge trimmer attachment 2 is configured so that both switches 5 and 6 must be actuated in order to supply power to the hedge trimmer blades, operation of the powered tool in hedge trimmer mode cannot be carried out in a single-handed manner, thereby ensuring that statutory safety requirements are complied with. Moreover, where such stringent safety requirements are not prevalent, operation of a powered tool (such as a line trimmer) is preferably carried out in a one-handed operation, this can easily be accomplished, owing to the wiring configuration within the line trimmer attachment 12.

It will be apparent that modifications could be made to the system described above. Thus, the motor could be provided within the main body unit 1 with all the electrical circuitry shown in Figures 4 and 5 positioned within the main body unit. In this case, the main body unit 1 would have a mechanical connection with the working appliance of the attached functional attachment.

In another modified arrangement, the line trimmer attachment 12 could be provided with a sliding interlock or attachment that engages the second switch 6. The electrical circuitry would then be such that both switches 5 and 6 have to be actuated in order to supply power to the line trimmer attachment 12. One-handed operation would, however, still be possible, as only the first switch 5 would need to be manually actuated.

It would also be possible to separate the mechanical and electrical connections between the main body unit 1 and each of the functional attachments 2, 12. In this case, separate electrical connectors would be provided on the main body unit 1 for electrical connection to the respective functional attachments 2, 12.

It would also be possible to provide the main body unit 1 with sensors which detect a given parameter of an attached functional attachment 2, 12, the sensors being arranged to modify the electrical circuitry within the main body unit to provide for one-handed or two-handed switching depending on the nature of the functional attachment attached.

It would also be possible to control the supply of power to a given functional attachment 2, 12, by transmitting signals from the main body unit 1 to the attached functional attachment without the use of electrical wiring, for example by radio frequency signals, infrared signals or optical signals. In this case, the motor and power supply could be provided within the functional attachments 2, 12.

It would also be possible to arrange for power to be transmitted to the relevant working appliance, following actuation of one or both of the switches 5 and 6, in any other appropriate manner.

It would, of course, be possible to power the tool directly from the mains, instead of using a battery as the power source. In this case, the functional attachment 2, 12 could be arranged to use different parts of the applied alternating current. For example, the hedge trimmer attachment 2 could be configured to work using the positive part of the alternating current cycle, and the line trimmer attachment 12 could be configured to work using the negative part of the applied alternating current cycle. The switches 5 and 6 would then be arranged so that both switches would need to be actuated to supply the positive part of the alternating current cycle, actuation of the switch 5 alone being arranged to provide the negative part of the alternating current cycle. Alternatively, the tool could be powered by a dc or ac source that has elements separately controlled by the switches 5 and 6.

## Claims

1. A powered tool comprising a main body unit and a functional attachment having a working appliance, the main body unit and the functional attachment being provided with complementary inter-engageable connectors, and the tool being provided with first and second actuators for controlling the supply of power to the working appliance, wherein the arrangement is such that actuation of the first actuator or actuation of both actuators is necessary to enable the supply of power to the working appliance in dependence upon the actuation requirements of the functional attachment.

2. A tool as claimed in claim 1, wherein at least the first actuator is associated with the main body unit.

3. A tool as claimed in claim 2, wherein both actuators are associated with the main body unit.

4. A powered tool as claimed in any one of claims 1 to 3, wherein the functional attachment is a hedge trimmer, and the working appliance is a pair of hedge trimmer blades, the power transmission means being such that power is supplied to the hedge trimmer blades only when both actuators are actuated.

5. A powered tool as claimed in any one of claims 1 to 3, wherein the functional attachment is a line trimmer, and the working appliance is a rotatable cutting line, the power transmission means being such that power is supplied to the rotatable cutting line when the first actuator is actuated.

6. A powered tool as claimed in any one of claims 1 to 5, further comprising power transmission means for transmitting power from a power source in the main body unit to the working appliance.

7. A powered tool as claimed in claim 6, wherein the power transmission means includes electrical circuitry provided within the main body unit and the functional attachment, the electrical circuitry within the main body unit including first and second switches which are positioned between a source of electrical power and the connector of the main body unit, the electrical circuitry within the main body unit including first, second and third wires terminating at said connector, the first wire leading from the output of the first switch, the second wire leading from the output of the second switch, and the third wire bypassing the second switch, the first and second switches constituting the first and second actuators.

8. A powered tool as claimed in claim 7 when appendant to claim 4, wherein the electrical circuitry within the functional attachment includes fourth and fifth wires leading from the power input terminals of an electric motor provided within the functional attachment for powering the working appliance, the fourth and fifth wires terminating at the connector of the functional attachment for electrical connection with the terminations of the first and third wires and the connector of the main body unit.

9. A powered tool as claimed in claim 7 when appendant to claim 5, wherein the electrical circuitry within the functional attachment includes fourth and fifth wires leading from the power input terminals of an electric motor provided within the functional attachment for powering the working appliance, the fourth and fifth wires terminating at the connector of the functional attachment for electrical connection with the terminations of the first and second wires at the connector of the main body unit.

10. A powered tool as claimed in any one of claims 1 to 9, further comprising an electrical power source attachable to the main body unit.

11. A powered tool as claimed in claim 10, wherein a battery constitutes the electrical power source.

12. A powered tool assembly comprising a main body unit and first and second functional attachments each having a respective working appliance, the main body unit and each of the functional attachments being provided with complementary inter-engageable connectors, and the main body unit being provided with first and second actuators for controlling the supply of power to the working appliance of an attached functional attachment, wherein the arrangement is such that actuation of the first actuator enables the supply of power to the working appliance of the first functional attachment, and the actuation of both actuators enables the supply of power to the working appliance of the second functional attachment.

13. A method of assembling and operating a powered tool, the method comprising:-
providing a main body unit having first and second actuators;
providing a plurality of functional attachments each having a respective working appliance;
selecting one of the functional attachments and mounting it to the main body unit; and
operating either the first actuator or both actuators of the main body unit to supply power to the working appliance of an attached functional attachment depending upon whether that functional attachment requires one-handed or two-handed operation.
